# EUROPÄISCHE PATENTSCHRIFT

(11) **EP 2 105 356 B1**
(45) Veröffentlichungstag und Bekanntmachung des Hinweises auf die Patenterteilung: **03.10.2012**
(21) Anmeldenummer: 09100080.2
(22) Anmeldetag: 28.01.2009
(51) Int. Cl.: B60R 21/015

(54) **Verfahren und Steuergerät zur Ansteuerung von Personenschutzmitteln für ein Fahrzeug**
Control device and method for controlling personal safety devices for a vehicle
Procédé et appareil de commande destinés à la commande de moyens de protection de personnes pour un véhicule

(30) Priorität: 27.03.2008 DE 102008000861
(43) Veröffentlichungstag der Anmeldung: 30.09.2009
(73) Patentinhaber: Robert Bosch GmbH, 70442 Stuttgart (DE)
(72) Erfinder: Krieg, Markus, 66503, Dellfeld (DE); Rittler, Stephan, 73660, Urbach (DE); Hiemer, Marcus, 88074, Kehlen (DE)

(56) Entgegenhaltungen:
- EP-A- 1 632 403
- DE-A1-102007 000 047
- GB-A- 2 301 906
- US-A1- 2002 105 416
- US-A1- 2005 280 304

## Beschreibung

### Stand der Technik

Die Erfindung betrifft ein Verfahren bzw. ein Steuergerät zur Ansteuerung von Personenschutzmitteln für ein Fahrzeug nach der Gattung der unabhängigen Patentansprüche.

Bei einem Heckaufprall ist ein Schleudertrauma durch einen sogenannten "Whiplash" eine mögliche Folge. Um sogenannte Whiplash-Verletzungen zu vermeiden oder ihnen entgegenzuwirken, schlägt DE 10 2006 002 746 A1 vor, eine crashaktive Kopfstütze vorzusehen.

Aus US 2005/0280304 A1 sind Kopfstützen gemäβ dem Oberbegriff des Anspruchs 1 bekannt, die in Abhängigkeit von Signalen eines Unfallsensors und eines Sensors zur Überwachung der Kopfposition angesteuert werden.

### Offenbarung der Erfindung

Das erfindungsgemäße Verfahren bzw. das erfindungsgemäße Steuergerät mit den Merkmalen der unabhängigen Patentansprüche haben demgegenüber Vorteile. Es ist bekannt, dass nunmehr die Personenschutzmittel verbessert angesteuert werden, indem die Erzeugung des Ansteuersignals in Abhängigkeit von einem Signal einer Sensorik, die berührungslos sensiert, in der Kopfstütze eingebaut ist und die Kopfposition überwacht, und einem weiteren Signal einer Unfallsensorik erfolgt. Damit wird die Ansteuerung in ihrer Genauigkeit und zeitlichen Präzision verbessert. Insbesondere kann mit einer solchen Kopfstütze auf die Bestückung mit einer Hecksensorik verzichtet werden. Eine bereits vorhandene Whiplash-Erkennung kann durch die zusätzlichen Sensorinformationen aus der Kopfstütze entsprechend sensibler appliziert werden, um die geforderten Auslösezeiten sowie eine höhere Missuse- d.h. Fehlauslösungsstabilität zu erreichen.

Weiterhin ist vorteilhaft, dass auch ohne eine Ansteuerung der Kopfstütze das Signal der Sensorik in der Kopfstütze dazu verwendet werden kann, die Auslösung von Rückhaltemitteln wie z. B. Frontairbags zu verbessern. Damit lassen sich nämlich sogenannte Out-of-Position-Situationen erkennen, das sind solche Situationen, in denen sich der Fahrzeuginsasse so positioniert hat, dass ein Auslösen beispielsweise von Frontairbags zu schweren Verletzungen führen würde. In diesen Situationen hat demnach der Passagier nicht die als Standard angenommene Sitzposition aufrecht sitzend eingenommen, sondern ist frontal oder seitlich verlagert. Dadurch verringert sich der Abstand zu den Rückhaltemitteln und eine Auslösung der Rückhaltemittel kann die ansonsten gewohnte Schutzwirkung der Rückhaltemittel negativ beeinträchtigen.

Weiterhin ist es möglich, mit dem erfindungsgemäßen Verfahren bzw. dem erfindungsgemäßen Steuergerät den Insassenstatus zu plausibilisieren. Insbesondere ist es dadurch sicherer, unterschiedliche Personentypen wie eine leichte Frau oder einen schweren Mann zu unterscheiden. Beispielsweise kann die Position der Sensorik in der Kopfstütze dazu verwendet werden, zu plausibilisieren, dass der Passagier klein ist.

Vorteilhafterweise wird die tatsächliche Position des Fahrers bei der Ansteuerung der Personenschutzmittel berücksichtigt. Für den Fall einer Out-of-Position-Situation kann gegebenenfalls die Auslösung unterdrückt oder angepasst werden, beispielsweise durch adaptive Systeme wie ein Adaptive Vent. Das ist ein adaptives Entlüften des Airbags.

Auch kann ein im Fahrzeug vorhandenes Modell des Kfz-Insassen durch Messgrößen aus der Sensorik in der Kopfstütze verbessert werden. Eine erste Variante eines solchen Modells ist beispielsweise einfach ein Massepunkt. Damit liegt ein eindimensionales Modell vor. Eine zweite Variante besteht aus zwei eine Torsionsfeder gekoppelten Ellipsen für Kopf und Rumpf. Damit liegt ein zweidimensionales Modell vor. Es ist weiterhin möglich, auch ein dreidimensionales Modell vorzusehen.

Vorliegend sind Personenschutzmittel passive Personenschutzmittel wie Airbags, Gurtstraffer und eine crashaktive Kopfstütze. Aber auch alle anderen dem Fachmann bekannten Personenschutzmittel können hierunter subsummiert werden. Dabei bedeutet die Ansteuerung dieser Personenschutzmittel, dass diese Personenschutzmittel aktiviert werden.

Das Überwachen der Kopfposition bedeutet beispielsweise, dass der Abstand zur Kopfstütze, die Höhe des Kopfes und/oder Bewegungsparameter erfasst werden.

Die berührungslos sensierende Sensorik ist vorzugsweise kapazitiv ausgestaltet, d.h., beispielsweise wird ein elektrisches Feld ausgegeben, beispielsweise über eine Antenne oder einen Kondensator, und die Veränderung des elektrischen Feldes in Folge der Kopfposition führt zu den Sensorwerten.

Die Unfallsensorik kann eine innerhalb und/oder außerhalb des Steuergeräts befindliche Sensorik sein, wobei zu der Sensorik beispielsweise Beschleunigungssensoren, Körperschallsensoren, Luftdrucksensoren, Umfeldsensoren, Fahrdynamiksensoren usw. gehören können.

Bei den Schnittstellen handelt es sich um hard- oder softwaremäßige Ausprägungen. Insbesondere die hardwaremäßige Ausprägung kann als integrierter Schaltkreis oder Teil eines integrierten Schaltkreises ausgeführt sein. Das Steuergerät ist dabei ein elektrisches Gerät, das Sensorsignale verarbeitet und in Abhängigkeit davon Steuersignale für die Personenschutzmittel erzeugt.

Die Auswerteschaltung ist beispielsweise ein Prozessor mit entsprechender Software, also einem Algorithmus, beispielsweise ein Mikrocontroller. Es sind jedoch auch andere Möglichkeiten denkbar wie ein ASIC oder gar eine diskrete Schaltung.

Auch die Ansteuerschaltung kann Teil eines integrierten Schaltkreises wie die Schnittstellen sein oder ein eigener integrierter Schaltkreis. Auch eine diskrete Lösung ist dabei möglich. Die Ansteuerschaltung weist dabei eine entsprechende Logik auf, um das Ansteuersignal zu verarbeiten und die elektrisch ansteuerbaren Leistungsschalter wie MOSFET-Transistoren, um beispielsweise den Zündstrom zu den Zündelementen der Airbags zu schalten.

Durch die in den abhängigen Ansprüchen aufgeführten Maßnahmen und Weiterbildungen sind vorteilhafte Verbesserungen des in den unabhängigen Patentansprüchen angegebenen Verfahrens bzw. Steuergeräts zur Ansteuerung von Personenschutzmitteln für ein Fahrzeug möglich.

Es ist dabei vorteilhaft, dass als eines der Personenschutzmittel bei der Ansteuerung die Kopfstütze in Richtung des Kopfes bewegt wird. Damit kann dann bei einem Heckaufprall beispielsweise den Folgen des sogenannten "Whiplash" entgegengewirkt werden. Bei einem Heckaufprall geschieht dann die Ansteuerung entsprechend schnell. Der Heckaufprall kann dabei insbesondere auch in Abhängigkeit von Signalen der Kopfstützensensorik erkannt werden, wie schnell sich nämlich das elektrische Feld in Folge der Kopfbewegung ändert. Dies kann dann umgerechnet werden, um einen solchen Heckaufprall zu erkennen. Durch das Signal der Unfallsensorik kann dies entsprechend plausibilisiert werden.

Es ist weiterhin vorteilhaft, dass anhand der Überwachung des Kopfes eine Kopfbewegung ermittelt wird. Damit können dann Parameter wie eine Geschwindigkeit der Kopfbewegung oder auch eine Trajektorie bestimmt werden. Diese Parameter können zum einen für die Ansteuerung der crashaktiven Kopfstütze und zum anderen zur Charakterisierung des Aufpralls auf das Fahrzeug verwendet werden.

Vorteilhafterweise wird die Überwachung der Kopfposition durch eine Beeinflussung eines elektrischen Felds durch die Kopfposition in der Umgebung der Kopfstütze durchgeführt. D. h. der Kopf wird in das elektrische Feld eingebracht und verändert so die Feldlinien. Dies ist dann entsprechend messbar. Die Messwerte können dann beispielsweise in Bewegungsparameter wie die Geschwindigkeit und die Richtung umgerechnet werden. Dies kann anhand von Tabellen oder Formeln oder Näherungen erreicht werden.

Darüber hinaus ist es vorteilhaft, dass in Abhängigkeit vom ersten Signal, d. h. der in der Kopfstütze angeordneten Sensorik wenigstens eine Ansteuerschwelle für wenigstens ein vom zweiten Signal abgeleiteten dritten Signal beeinflusst wird, d.h. beispielsweise sensibler geschaltet wird. Das dritte Signal wird vom Signal der Unfallsensorik abgeleitet. Dies kann eine einfache Filterung oder auch das zweite Signal selbst sein oder auch Integrationen wie eine einfache oder zweifache Integration. Aber auch jede andere Signalverarbeitung ist vorliegend darunter zu verstehen. Dieses dritte Signal wird mit der Ansteuerschwelle verglichen, um zu entscheiden, ob ein Ansteuerfall vorliegt oder nicht. Durch entsprechende Beeinflussung der Ansteuerschwelle wird bewirkt, dass ein Personenschutzmittel schneller oder später oder gar nicht angesteuert wird. Dies hängt von der Beeinflussung der Ansteuerungsschwelle ab.

Es ist weiterhin vorteilhaft, dass anhand des ersten Signals der in der Kopfstütze angeordneten Sensorik zumindest eines der Personenschutzmittel unterdrückt wird. Dabei kann in einer sogenannten out-of-position-Situation die Ansteuerung von in ihrer Rückhaltewirkung kräftigen Personenschutzmitteln wie einer zweiten Airbagstufe unterdrückt werden. Damit wird der Schutz des Fahrzeuginsassen verbessert. Die out-of-position kann sehr gut anhand des gemessenen elektrischen Feldes bestimmt werden. Ist dieses nämlich sehr viel kleiner als ein vorgegebener Wert, dann ist der Kopf außerhalb der näheren Umgebung der Kopfstütze. Diese out-of-position kann insbesondere durch eine Flagge in einem Speicher des Steuergeräts angezeigt werden und führt dann zum Unterdrücken zumindest eines Personenschutzmittels wie beispielsweise der zweiten Airbagstufe.

Ausführungsbeispiele der Erfindung sind in der Zeichnung dargestellt und werden in der nachfolgenden Beschreibung näher erläutert.

Es zeigen
Figur 1 die Erkennung eines Heckcrashs mit dem erfindungsgemäßen Steuergerät und Verfahren,
Figur 2 eine out-of-position-Erkennung mit dem Sensor in der Kopfstütze,
Figur 3 ein Blockschaltbild des erfindungsgemäßen Steuergeräts,
Figur 4 ein Vorverlagerungsbeschleunigungsdiagramm mit Schwellwerten und
Figur 5 ein Flussdiagramm des erfindungsgemäßen Verfahrens.

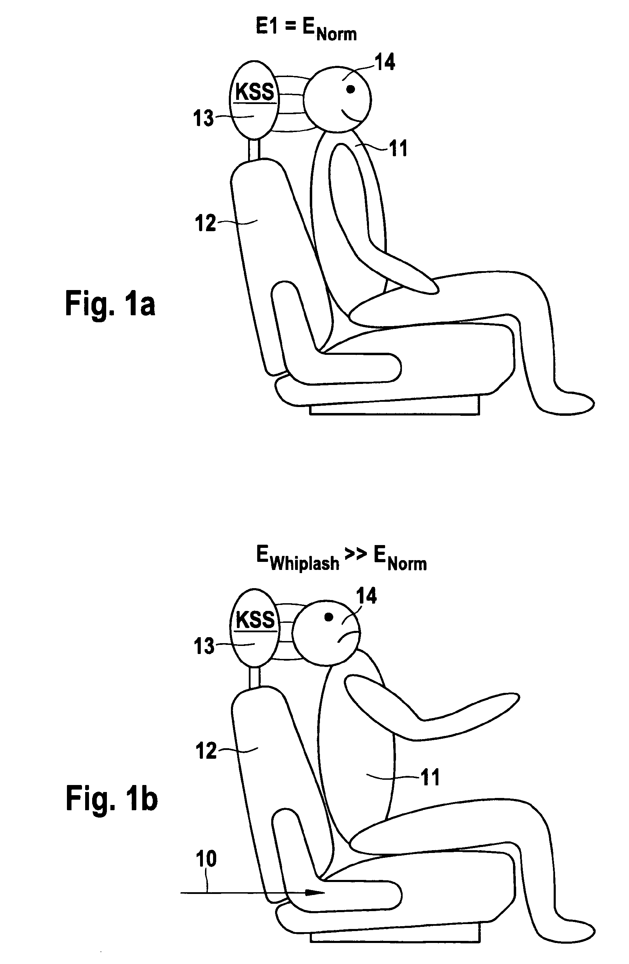

Figur 1 zeigt in den Abschnitten a und b den Fahrzeuginsassen 11 in einer Normalposition, d. h. aufrecht sitzend und bei einem Heckcrash, bei dem sich der Kopf 14 schnell auf die Kopfstütze 13 zubewegt. Der Heckcrash ist durch den dicken Pfeil 10 gekennzeichnet.

In Figur 1a wird ein normales elektrisches Feld durch die Sensorik KSS in der Kopfstütze 13 für den Kopf 14 der auf dem Sitz 12 sitzenden Person 11 festgestellt.

In Figur 1b wird dagegen ein sehr viel höheres elektrisches Feld in Folge der Bewegung des Kopfes 14 auf die Kopfstütze 13 erzeugt. Dies wird durch den Heckcrash 10 verursacht. Dabei ist die Feldstärke E_Whiplash sehr viel größer als ein erwarteter Wert E_Norm. Damit kann durch eine Schwellwertabfrage des gemessenen elektrischen Felds und insbesondere der Änderung dieses elektrischen Felds auf einen Heckcrash geschlossen werden. Dies kann durch entsprechende Schwellwertschalter erreicht werden. Schwellwertschalter können dabei auch variable Schwellwerte aufweisen.

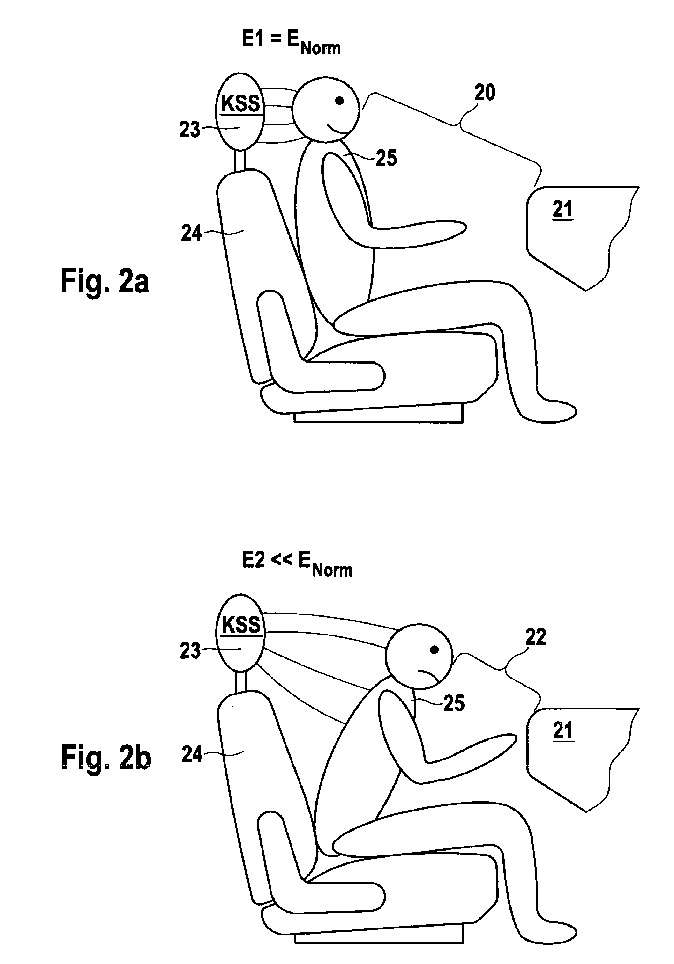

Figur 2a zeigt die Person 25 in der Normalposition aufrecht sitzend mit der Kopfstütze 23 der Sensorik KSS, dem Sitz 24 und dem Abstand 20 von der Person 25 zur Armatur 21 mit Airbag.

In Figur 2b hat die Person 25 ihre Position selbständig geändert. Die Position wurde nun in Richtung auf das Lenkrad bzw. die Armatur 21 hinbewegt, sodass die in der Kopfstütze 23 befindliche Sensorik KSS nur noch ein schwaches elektrisches Feld im Vergleich zu dem Schwellwert E_Norm messen kann. Nunmehr liegt eine out-of-position vor, was durch den kleinen Abstand 22 zur Armatur mit Airbag 21 angedeutet wird. Bei dieser Out-of-Position-Position der Person 25 sollte ein Frontairbag nicht ausgelöst werden, da er zu Kopfverletzungen führen könnte.

Dies zeigt, dass das erfindungsgemäße Verfahren bzw. das erfindungsgemäße Steuergerät sowohl zur Heckcrash-Erkennung und zur entsprechenden Ansteuerung der crashaktiven Kopfstütze als auch zur Out-of-Position-Erkennung des Fahrzeuginsassen verwendet werden können. Diese Funktionen können selbstverständlich miteinander kombiniert werden.

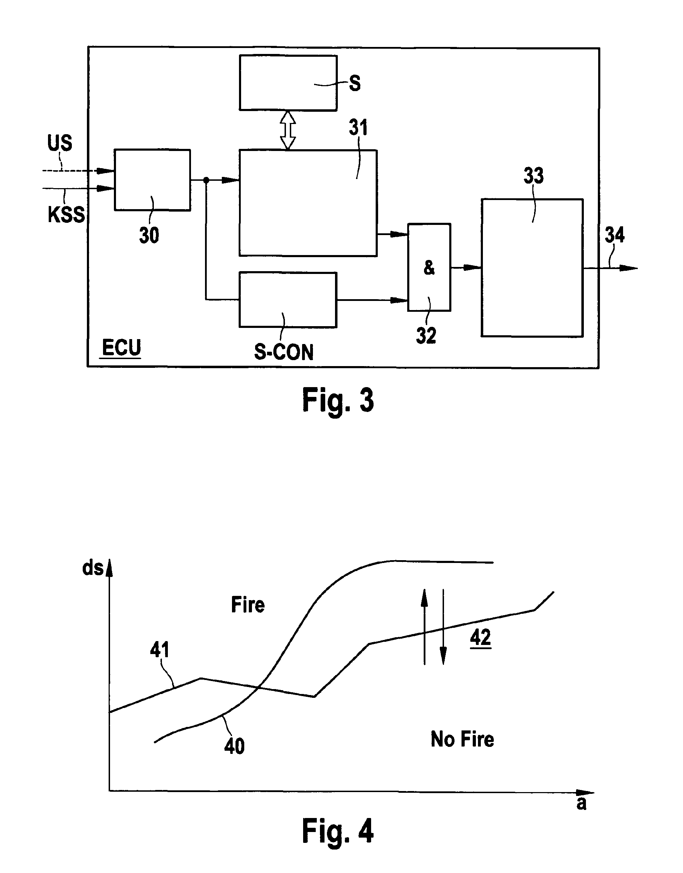

Figur 3 zeigt in einem Blockschaltbild das erfindungsgemäße Steuergerät ECU mit einer Schnittstelle 30, die sowohl die Signale der Sensorik KSS als auch der Unfallsensorik US aufnimmt. Die Schnittstelle 30 kann dabei Teil eines System-ASICs sein, der mehrere Funktionen für das Steuergerät ECU beherbergt. Insbesondere kann die Schnittstelle 30 alternativ auch als Softwareelement vorhanden sein. Bei der Unfallsensorik US handelt es sich üblicherweise um eine Beschleunigungssensorik, aber auch alle anderen dem Fachmann bekannten Sensoriken können hier verwendet werden wie eine Drehbewegungssensorik, eine Umfeldsensorik, eine Fahrdynamiksensorik, eine Körperschallsensorik oder eine Luftdrucksensorik. Die Daten werden dann dem Mikrocontroller 31, der den Auswertealgorithmus beherbergt, und einem Sicherheitscontroller S-CON übermittelt, um parallel ausgewertet zu werden. Der Mikrocontroller 31 wertet die Signale der Kopfstützensensorik KSS aus, um zu erkennen, ob ein Heckaufprall oder eine out-of-position oder ein anderer Fall vorliegt. Weiterhin werden diese Sensorsignale der Unfallsensorik US dahingehend ausgewertet, ob ein Aufprall vorliegt. Dabei können die Entscheidungsschwellen, d. h. die Ansteuerschwellen für ein von der Unfallsensorik abgeleitetes Signal in Abhängigkeit vom Signal der Köpfstützensensorik KSS verändert werden. Insbesondere verknüpft der Mikrocontroller 31 das Signal der Unfallsensorik und das Signal der Kopfstützensensorik KSS. Diese Verknüpfung kann additiv, multiplikativ oder auch logisch erfolgen, indem beide Signale unterschiedlich mit Schwellwertschaltern geprüft werden. Das entstehende Ansteuersignal wird dann einem UND-Gatter 32 zugeführt. Das Ansteuersignal kann dabei durch eine Flagge im Speicher S derart beeinflusst werden, dass gewisse Personenschutzmittel, wie beispielsweise die zweite Airbagstufe, unterdrückt werden.

Parallel zur Auswertung im Mikrocontroller 31 ist auch noch ein Sicherheitscontroller S-CON vorgesehen, der zumindest die Signale der Unfallsensorik US parallel ausgewertet hat. Nur wenn beide, sowohl der Mikrocontroller 31 als auch der Sicherheitscontroller S-CON, auf eine Ansteuerung entschieden haben, erfolgt die Freigabe durch das UND-Gatter 20. Dann wird das Ansteuersignal an die Ansteuerschaltung 33 übermittelt, um die Personenschutzmittel, wie beispielsweise die crashaktive Kopfstütze als sogenannter Whiplash-Aktuator und andere Personenschutzmittel, über den Strom 34 anzusteuern.

Vorliegend sind nur die für das Verständnis der Erfindung notwendigen Komponenten dargestellt. Weitere für den Betrieb des Steuergeräts ECU notwendigen Komponenten sind der Einfachheit halber weggelassen worden.

Figur 4 zeigt ein Vorverlagerungsbeschleunigungsdiagramm, um zu zeigen, dass das Signal der Kopfstützensensorik KSS auch für das Umschalten von Ansteuerungsschwellen für den Algorithmus für die Unfallsensorsignale verwendet werden kann. Zwei Schwellen sind hier vorgegeben, nämlich die Schwellen 40 und 41, zwischen denen in Abhängigkeit vom Kopfstützensignal umgeschaltet werden kann. Es ist jedoch auch jede andere additive oder multiplikative Veränderung eines Schwellwerts in Abhängigkeit vom Signal der Kopfstützensensorik KSS möglich. Bei der Kopfstützensensorik KSS handelt es sich beispielsweise um einen kapazitiven Sensor mit zwei Antennen und einer Auswerteelektronik. Der Kopf vermindert gleich einer Elektrode das elektrische Feld vor dem Sensor. Durch Abgleich der Signalstärken an beiden Antennen kann die Höhe und Lage des Kopfes in Referenz zu den bekannten Abständen zum Fahrzeugboden bzw. -dach bestimmt werden.

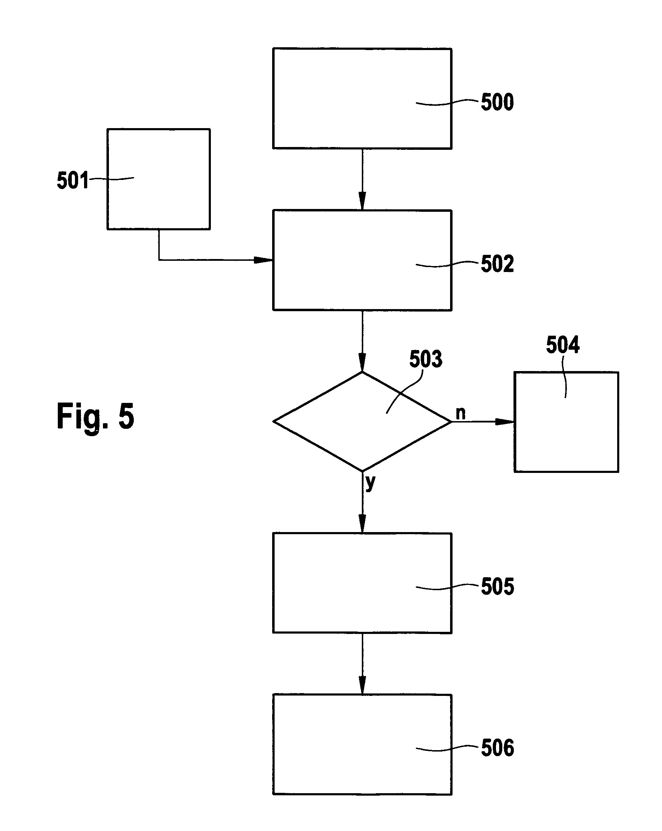

Figur 5 zeigt in einem Flussdiagramm das erfindungsgemäße Verfahren. In Verfahrensschritt 500 erfolgt das Erzeugen des ersten Signals der Kopfstützensensorik KSS in Abhängigkeit von der Kopfposition, die beispielsweise das elektrische Feld der Kopfstützensensorik beeinflusst. Anstatt einer kapazitiven Sensorik können jedoch auch andere Sensoriken wie eine Radar-, Ultraschall-, Video- usw. -sensorik verwendet werden.

In Verfahrensschritt 501 wird ein zweites Signal der Unfallsensorik beispielsweise von Beschleunigungssensoren erzeugt.

In Verfahrensschritt 502 erfolgt dann die Verknüpfung des ersten und zweiten Signals. Diese Verknüpfung kann auf unterschiedlichste Weisen erfolgen. Es ist möglich, beide Signale beispielsweise nach einer Vorverarbeitung zu addieren, zu multiplizieren, einen Durchschnittswert zu bilden, einen Maximalwert auszuwählen oder auch die Signale jeweils zunächst Schwellwertschaltern zuzuführen und dann in Abhängigkeit von den Ausgangssignalen dieser Schwellwertschalter ein Ansteuerungssignal zu erzeugen. Dies kann durch eine logische Verknüpfung wie ein UND-Gatter erfolgen.

In Verfahrensschritt 503 wird dann geprüft, ob ein Ansteuerungsfall vorliegt oder nicht. Ist das nicht der Fall, dann endet in Verfahrensschritt 504 dieses Verfahren. Liegt jedoch ein Ansteuerungsfall vor, dann wird in Verfahrensschritt 505 ein Ansteuersignal erzeugt, das angibt, wann und welche Personenschutzmittel wie stark angesteuert werden sollen. Dabei kann eine Flagge gesetzt sein, dass auf Grund einer out-of-position in Folge des ersten Signals des Fahrzeuginsassen starke Personenschutzmittel wie die zweite Airbagstufe unterdrückt werden. In Verfahrensschritt 506 erfolgt dann das Ansteuern der Kopfstütze und/oder anderer Personenschutzmittel.

## Patentansprüche

1. Verfahren zur Ansteuerung von Personenschutzmitteln für ein Fahrzeug mit folgenden Verfahrensschritten:
- Erzeugen eines ersten Signals in Abhängigkeit von einer Überwachung einer Kopfposition mittels einer in einer Kopfstütze (13) angeordneten berührungslos sensierenden Sensorik (KSS)
- Erzeugen eines zweiten Signals mittels einer Unfallsensorik (US)
- Ansteuern der Personenschutzmittel in Abhängigkeit vom ersten und vom zweiten Signal, **dadurch gekennzeichnet, dass** ein Mikrocontroller (31) das erste und das zweite Signal miteinander verknüpft, indem das erste und das zweite Signal unterschiedlich mit Schwellwertschaltern geprüft werden, so dass ein Ansteuersignal entsteht, das einem Und-Gatter (32) zugeführt wird, wobei ein Ausgangssignal eines Sicherheitscontrollers s-ion, der zumindest das zweite Signal auswertet, auch dem Und-Gatter (32) zugeführt wird.

2. Verfahren nach Anspruch 1, **dadurch gekennzeichnet, dass** als eines der Personenschutzmittel bei der Ansteuerung die Kopfstütze in Richtung des Kopfs bewegt wird.

3. Verfahren nach Anspruch 1 oder 2, **dadurch gekennzeichnet, dass** anhand der Überwachung des Kopfes eine Kopfbewegung ermittelt wird.

4. Verfahren nach Anspruch 3, **dadurch gekennzeichnet, dass** im Rahmen der Ermittlung der Kopfbewegung eine Geschwindigkeit des Kopfes bestimmt wird.

5. Verfahren nach einem der vorhergehenden Ansprüche, **dadurch gekennzeichnet, dass** die Überwachung der Kopfposition durch eine Beeinflussung eines elektrischen Felds durch die Kopfposition in der Umgebung der Kopfstütze durchgeführt wird.

6. Verfahren nach einem der vorhergehenden Ansprüche, **dadurch gekennzeichnet, dass** in Abhängigkeit vom ersten Signal wenigstens eine Ansteuerungsschwelle für wenigstens ein vom zweiten Signal abgeleitetes drittes Signal beeinflusst wird.

7. Verfahren nach einem der vorhergehenden Ansprüche, **dadurch gekennzeichnet, dass** anhand des ersten Signals zumindest eines der Personenschutzmittel unterdrückt wird.

8. Verfahren nach Anspruch 7, **dadurch gekennzeichnet, dass** anhand des ersten Signals eine Flagge gesetzt wird, wobei die gesetzte Flagge zum Unterdrücken des zumindest einen Personenschutzmittels führt.

9. Steuergerät (ECU) zur Ansteuerung von Personenschutzmitteln für ein Fahrzeug mit:
- einer ersten Schnittstelle (30), die ein erstes Signal einer in der Kopfstütze (13) angeordneten berührungslos sensierenden Sensorik bereitstellt, wobei das erste Signal zur Überwachung einer Kopfposition vorgesehen ist,
- einer zweiten Schnittstelle (30), die ein zweites Signal einer Unfallsensorik (US) bereitstellt,
- einer Auswerteschaltung (31) zur Erzeugung eines Ansteuersignals in Abhängigkeit vom ersten und vom zweiten Signal,
- einer Ansteuerungsschaltung (33) zur Ansteuerung der Personenschutzmittel in Abhängigkeit vom Ansteuerungssignal, **dadurch gekennzeichnet, dass** ein Mikrocontroller (31) das erste und das zweite Signal miteinander verknüpft, indem das erste und das zweite Signal unterschiedlich mit Schwellwertschaltern geprüft werden, so dass ein Ansteuersignal entsteht, das einem Und-Gatter (32) zugeführt wird, wobei ein Ausgangssignal eines Sicherheitscontrollers s-con, der zumindest das zweite Signal auswertet, auch dem Und-Gatter (32) zugeführt wird.

10. Steuergerät nach Anspruch 9, **dadurch gekennzeichnet, dass** das Steuergerät einen Speicher (S) aufweist, in dem in Abhängigkeit vom ersten Signal eine Flagge zum Unterdrücken zumindest eines Personenschutzmittels gesetzt wird.

## Claims

1. Method for actuating personal protection means for a vehicle, having the following method steps:
- generation of a first signal as a function of monitoring of a head position by means of a sensor system (KSS) which is arranged in a headrest (13) and senses in a contactless fashion,
- generation of a second signal by means of an accident sensor system (US),
- actuation of the personal protection means as a function of the first and second signals **characterized in that** a microcontroller (31) logically combines the first and second signals with one another by checking the first and second signals differently with threshold value switches, with the result that an actuation signal is produced which is fed to an AND gate (32), wherein an output signal of a protection controller (s-con), which evaluates at least the second signal, is also fed to the AND gate (32).

2. Method according to Claim 1, **characterized in that** the headrest is moved in the direction of the head during the actuation process, as one of the personal protection means.

3. Method according to Claim 1 or 2, **characterized in that** a head movement is identified on the basis of the monitoring of the head.

4. Method according to Claim 3, **characterized in that** a speed of the head is determined within the scope of the identification of the head movement.

5. Method according to one of the preceding claims, **characterized in that** the monitoring of the head position is carried out by influencing an electrical field by means of the position of the head in the surroundings of the headrest.

6. Method according to one of the preceding claims, **characterized in that** at least one actuation threshold for at least a third signal which is derived from the second signal is influenced as a function of the first signal.

7. Method according to one of the preceding claims, **characterized in that** at least one of the personal protection means is suppressed by means of the first signal.

8. Method according to Claim 7, **characterized in that** a flag is set by means of the first signal, wherein the flag which is set causes the at least one personal protection means to be suppressed.

9. Control unit (ECU) for actuating personal protection means for a vehicle, having:
- a first interface (30) which makes available a first signal of a sensor system which is arranged in the headrest (13) and senses in a contactless fashion, wherein the first signal is provided for monitoring a position of the head,
- a second interface (30) which makes available a second signal of an accident sensor system (US),
- an evaluation circuit (31) for generating an actuation signal as a function of the first and second signals,
- an actuation circuit (32) for actuating the personal protection means as a function of the actuation signal, **characterized in that** a microcontroller (31) combines the first and second signals with one another by checking the first and second signals differently with threshold value switches, with the result that an actuation signal is produced which is fed to an AND gate (32), wherein an output signal of a protection controller (s-con), which evaluates at least the second signal, is also fed to the AND gate (32).

10. Control unit according to Claim 9, **characterized in that** the control unit has a memory (S) in which a flat for suppressing at least one personal protection means is set as a function of the first signal.

## Revendications

1. Procédé pour commander des moyens de protection de personnes pour un véhicule comprenant les étapes suivantes :
- génération d'un premier signal en fonction d'une surveillance d'une position de la tête au moyen d'un dispositif de détection (KSS) détectant sans contact disposé dans un appuie-tête (13),
- génération d'un deuxième signal au moyen d'un dispositif de détection d'accident (US),
- commande de moyens de protection de personnes en fonction du premier et du deuxième signal, **caractérisé en ce**
**qu'**un microcontrôleur (31) combine ensemble le premier et le deuxième signal par le fait que le premier et le deuxième signal sont contrôlés différemment avec des commutateurs à valeur de seuil, de manière à produire un signal de commande qui est acheminé à une porte ET (32), un signal de sortie d'un contrôleur de sécurité (s-con), lequel interprète au moins le deuxième signal, étant également acheminé à la porte ET (32).

2. Procédé selon la revendication 1, **caractérisé en ce que** l'un des moyens de protection de personnes est un déplacement de l'appuie-tête en direction de la tête lors de la commande.

3. Procédé selon la revendication 1 ou 2, **caractérisé en ce qu'**un mouvement de la tête est déterminé au moyen de la surveillance de la tête.

4. Procédé selon la revendication 3, **caractérisé en ce qu'**une vitesse de la tête est définie dans le cadre de la détermination du mouvement de la tête.

5. Procédé selon l'une des revendications précédentes, **caractérisé en ce que** la surveillance de la position de la tête est effectuée par une influence d'un champ électrique par la position de la tête dans l'environnement de l'appuie-tête.

6. Procédé selon l'une des revendications précédentes, **caractérisé en ce qu'**au moins un seuil de commande pour au moins un troisième signal dérivé du deuxième signal est influencé en fonction du premier signal.

7. Procédé selon l'une des revendications précédentes, **caractérisé en ce qu'**au moins l'un des moyens de protection de personnes est inhibé au moyen du premier signal.

8. Procédé selon la revendication 7, **caractérisé en ce qu'**un fanion est fixé au moyen du premier signal, le fanion fixé provoquant une inhibition de l'au moins un moyen de protection de personnes.

9. Contrôleur (ECU) pour commander des moyens de protection de personnes pour un véhicule comprenant :
- une première interface (30) qui délivre un premier signal d'un dispositif de détection détectant sans contact disposé dans l'appuie-tête (13), le premier signal étant prévu pour surveiller une position de la tête,
- une deuxième interface (30) qui délivre un deuxième signal d'un dispositif de détection d'accident (US),
- un circuit d'interprétation (31) pour générer un signal de commande en fonction du premier et du deuxième signal,
- un circuit de commande (33) pour commander les moyens de protection de personnes en fonction du signal de commande,
**caractérisé en ce qu'**un microcontrôleur (31) combine ensemble le premier et le deuxième signal par le fait que le premier et le deuxième signal sont contrôlés différemment avec des commutateurs à valeur de seuil, de manière à produire un signal de commande qui est acheminé à une porte ET (32), un signal de sortie d'un contrôleur de sécurité (s-con), lequel interprète au moins le deuxième signal, étant également acheminé à la porte ET (32).

10. Contrôleur selon la revendication 9, **caractérisé en ce que** le contrôleur présente une mémoire (S) dans laquelle, en fonction du premier signal, est fixé un fanion destiné à inhiber au moins un moyen de protection de personnes.
